# EUROPÄISCHE PATENTANMELDUNG

(11) **EP 3 210 917 A1**
(43) Veröffentlichungstag der Anmeldung: **30.08.2017**
(21) Anmeldenummer: 16157180.7
(22) Anmeldetag: 24.02.2016
(51) Int. Cl.: B65G 47/51, B65G 1/127

(54) **VERTIKALLAGER MIT HUBELEMENTEN FÜR WAREN**

(71) Anmelder: Werder Solutions AG, 5034 Suhr (CH)
(72) Erfinder: Werder, Ralph, 5034 Suhr (CH)
(74) Vertreter: AMMANN PATENTANWÄLTE AG BERN

(57) **Zusammenfassung**

Das Vertikallager (1) für Waren enthält einen Bereitstellungsträger (2), auf den die Waren in einer horizontalen Transportrichtung (4) bringbar sind. In einem Gestell (5) sind Hubelemente (19) für die Waren angeordnet, die mit mindestens einem umlaufenden Zugmittel (9) dauernd verbunden und in einer vertikalen Transportrichtung (10) auf- und ab bewegbar sind. Durch die Auswahl bestimmter Hubelemente (19) sind die vertikalen Abmessungen der übereinanderliegenden Lagerplätze individuell an die betreffende Ware (16) anpassbar.

## Beschreibung

Die Erfindung betrifft ein Vertikallager für Waren nach dem Oberbegriff des Patentanspruchs 1.

Eine Vorrichtung der eingangs genannten Art ist aus der Europäischen Patentanmeldung EP2450295A1 mit dem Titel "Vertikalspeicher für Behälter sowie Anordnung umfassend ein Regal sowie einen Vertikalspeicher" bekannt geworden. In einem Stützkörper sind mehrere übereinander angeordnete Aufnahmen angeordnet, welche durch einen Antrieb in der Höhe durch den Stützenkörper verfahrbar sind. In der unteren Endstellung der Behälteraufnahmen bilden diese einen auf dem Boden aufliegenden Stapel. Im Betrieb wird jeweils die im Stapel zuoberst liegende Aufnahme durch einen am Antrieb angeordneten Mitnehmer angehoben. Der vertikale Abstand der Aufnahmen und damit auch die maximale Höhe der Behälter wird durch den gegenseitigen Abstand der Mitnehmer bestimmt. Eine durch die Erfindung zu lösende Aufgabe besteht gemäss dem Dokument darin, die Kapazität bei der Ein- oder Auslagerung von Behältern in ein Regal, insbesondere ein Hochregal zu erhöhen und die Kosten gleichzeitig signifikant zu senken.

Durch die zunehmende Anzahl an e-shops beziehungsweise online-Shopping steigen die Anforderungen an die Logistikanlagen und die Logistikdienstleister. Immer grössere Stückzahlen an unterschiedlichen Gütern müssen in immer kürzeren Zeiten gehandhabt werden, wobei gerade bei der Lagerung auch die kürzer werdenden Produktelebenszyklen eine Rolle spielen. Der Wandel von "Business to Business" (BtoB oder B2B), bei dem die Losgrössen explizit grösser als 1 sind, zu "Business to Customer" (BtoC oder B2C) erfordert ein Lagermanagement mit Losgrösse 1, wobei auch die Rücknahmelogisitik (Ware kann kostenlos zurückgesandt werden) zu berücksichtigen ist.

Ausgehend von diesem Stand der Technik besteht eine Aufgabe der Erfindung darin, ein Vertikallager vorzuschlagen, bei dem der Platz für jede Ware an deren vertikale Abmessung anpassbar ist.

Die erfindungsgemässe Aufgabe wird durch die im kennzeichnenden Teil des Patentanspruchs 1 angegebenen Merkmale gelöst.

Damit kann der Platz im Gestell maximal ausgenutzt werden. Die vertikalen Abstände der Hubelemente können relativ geringgehalten werden, so dass bei einer gegebenen Gestellhöhe viele Waren mit einer geringen Höhe Platz finden. Für die Einlagerung von Waren mit einer grösseren Höhe bleiben die neben diesen Waren vorhandenen Hubelemente leer.

Eine weitere Aufgabe der Erfindung besteht darin, eine Lageranordnung zu schaffen, die es erlaubt viele gleichzeitige Sortierprozesse auszuführen und bei welcher der Platz für die Waren auch in horizontaler Richtung anpassbar ist.

Diese weitere Aufgabe wird durch die Merkmale des Patentanspruchs 10 gelöst.

Ausführungsbeispiele der Erfindung werden nachfolgend unter Bezugnahme auf die angefügten Zeichnungen beschrieben. Es zeigt:
- Figur 1: in einer perspektivischen Ansicht ein erstes Ausführungsbeispiel eines Vertikallagers;
- Figur 2: einen Ausschnitt aus Figur 1 in einem grösseren Massstab;
- Figuren 3a bis 3d: schematische Ansichten in Richtung der horizontalen Transportrichtung von vier Varianten eines Warenträgers;
- Figur 4: eine seitliche Ansicht einer weiteren Variante eines Warenträgers;
- Figur 5: in einer perspektivischen Ansicht ein zweites Ausführungsbeispiel eines Vertikallagers;
- Figur 6: eine perspektivische Ansicht einer Hubelement-Einheit des Ausführungsbeispiels gemäss Figur 5;
- Figur 7: einen Ausschnitt aus Figur 5 in einem grösseren Massstab;
- Figur 8: einen vergrösserten Ausschnitt des Ausführungsbeispiels gemäss Figur 5;
- Figur 9: eine perspektivische Ansicht schwenkbarer Hubelemente in ausgeschwenktem Zustand;
- Figur 10: eine perspektivische Ansicht schwenkbarer Hubelemente in eingeschwenktem Zustand;
- Figur 11: eine Einzelheit eines schwenkbaren Hubelements und
- Figur 12: einen weiteren Ausschnitt des Ausführungsbeispiels gemäss Figur 5, der den Hubantrieb veranschaulicht.

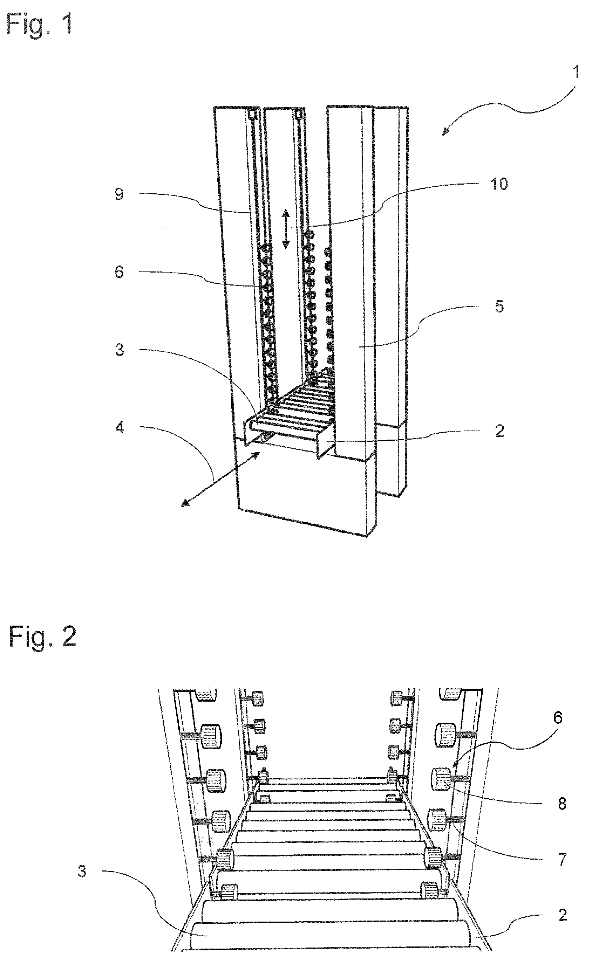

Die Figuren 1 bis 4 veranschaulichen ein erstes Ausführungsbeispiel eines erfindungsgemässen Vertikallagers 1. Ein Bereitstellungsträger 2 für die Waren ist mit Tragelementen 3 ausgestattet, die in diesem Beispiel die Form von Rollen haben, auf welche die Waren in einer horizontalen Transportrichtung 4 aufgebracht werden, und von denen mindestens eine antreibbar ist. In einem Gestell 5 ist eine Mehrzahl von Hubelementen 6 angeordnet, die mit umlaufenden Zugmitteln 9 fest verbunden und mit diesen in einer vertikalen Transportrichtung 10 bewegbar sind. Die Hubelemente 6 haben in diesem Ausführungsbeispiel die Form einer auf einer Achse 7 angeordneten, drehbaren Rolle 8 (siehe Figur 2), können aber auch anders ausgeführt sein, beispielsweise als Träger mit einem beliebigen Querschnitt, als einfache, starre Stifte, stiftartig mit einer Pilzform oder als Haken.

Wie man besonders deutlich in Figur 2 erkennt, sind die Hubelemente 6 zwischen zwei Tragelementen 3 in der vertikalen Transportrichtung 10 hindurch bewegbar. Die als Rollen ausgebildeten Tragelemente 3 sind dabei mittels seitlicher Träger zu Gruppen zusammengefasst. Alternativ ist es aber auch möglich, den Bereitstellungsträger 2 schmaler auszubilden, so dass sich die Hubelemente 6 seitlich daran vorbei bewegen können.

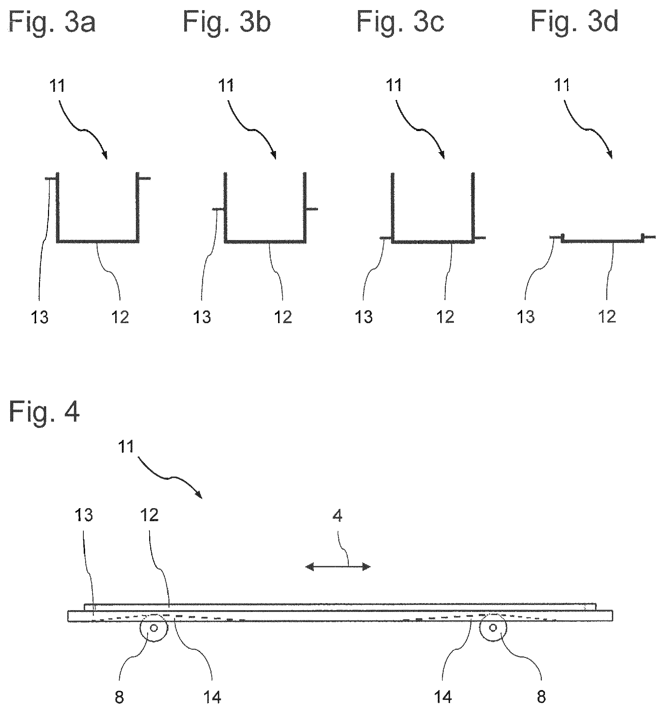

Beim Ausführungsbeispiel nach den Figuren 1 bis 4 werden die hier nicht zeichnerisch dargestellten Waren auf Warenträgern 11 angeordnet, die beispielsweise wie in den Figuren 3 und 4 dargestellt ausgebildet sein können. Gemäss den Figuren 3a, 3b, 3c und 3d umfasst der Warenträger 11 einen Trägerkörper 12, der wie ein offener oder geschlossener Kasten, eine Schale oder ein flaches Tablett ausgebildet sein kann, wobei die Breite dieses Trägerkörpers 12 zwischen den Hubelementen 6 hindurch passt, wenn der Warenträger 11 in der horizontalen Transportrichtung 4 in das Vertikallager 1 eingefahren wird. Auf beiden Seiten des Trägerkörpers 12 ist jeweils eine Rippe 13 angeordnet, die beim Einfahren in das Vertikallager 1 zwischen jeweils zwei übereinander angeordnete Hubelemente 6 greift, so dass beim Hochfahren der Hubelemente 6 der Warenträger 11 durch diese angehoben wird. Nach Figur 4 hat der Warenträger 11 die Gestalt eines Tabletts, dessen Gesamtbreite bis zwischen die Hubelemente 6 reicht. Die Ausführung als Tablett hat den Vorteil, dass der minimale vertikale Abstand der Waren im Vertikalspeicher 1 durch die Höhe der Waren und nicht durch die Höhe des Warenträgers 11 bestimmt wird. Im in Figur 4 dargestellten Beispiel hat der Warenträger 11 Vertiefungen 14 die beim Anheben auf den Rollen 8 ruhen und so den Warenträger 11 in horizontaler Richtung in seiner Lage stabilisieren. Solche Vertiefungen können beim Tablett im Boden des Tabletts oder bei allen Arten von Warenträgern an den beschriebenen Rippen 12 angeordnet sein.

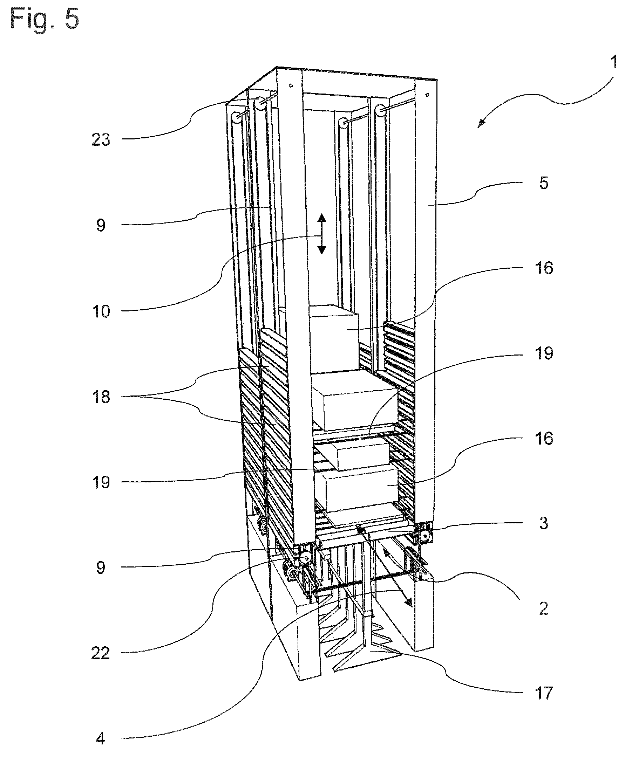

Das mit Bezugnahme auf die Figuren 5 bis 12 beschriebene Ausführungsbeispiel des Vertikallagers 1 unterscheidet sich vom vorangehend beschriebenen Ausführungsbeispiel insbesondere dadurch, dass hier auf speziell ausgebildete Warenträger verzichtet werden kann, obwohl bei Bedarf auch hier Warenträger wie beispielsweise Paletten oder Container verwendet werden können, die nicht speziell für die Verwendung im erfindungsgemässen Vertikallager ausgebildet sein müssen und damit keine Rippen 13 aufweisen. Dies wird durch Hubelemente 19 ermöglicht, die wahlweise in den Transportweg der Waren beziehungsweise Warenträger und aus diesem bewegbar sind, wie dies weiter unten noch eingehend beschrieben wird. In Figur 5 sind zwei in der horizontalen Transportrichtung hintereinander angeordnete Vertikallager 1 zu erkennen. Ausserdem sind Waren 16 eingezeichnet. Der Bereitstellungsträger 2 hat in diesem Beispiel ebenfalls als Rollen ausgebildete Tragelemente 3, wobei hier jeweils eine Stütze 17 für eine Anzahl von Tragelementen 3 vorgesehen ist. Gut sichtbar sind in Figur 5 Zugmittel 9, die über untere Umlenkrollen 22 und obere Umlenkrollen 23 endlos umlaufend angeordnet sind und an denen in regelmässigen Abständen die Hubelemente 19 befestigt sind. Jeweils eine Anzahl nebeneinanderliegender Hubelemente 19 ist dabei schwenkbar in einer kassettenartigen Hubelement-Einheit 18 angeordnet, welche ihrerseits mit dem Zugmittel 9 verbunden ist.

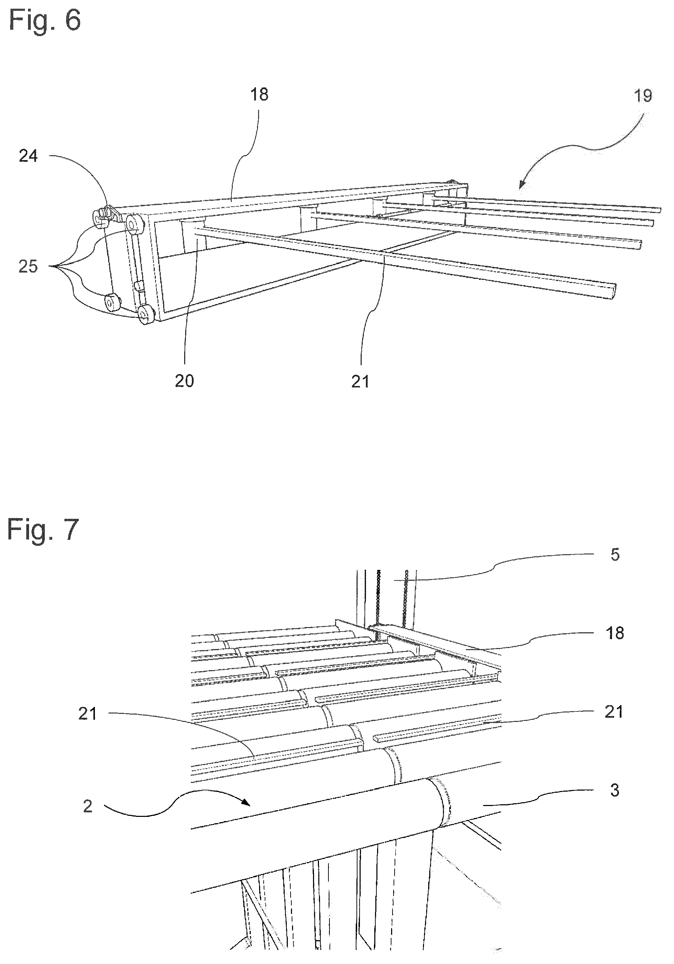

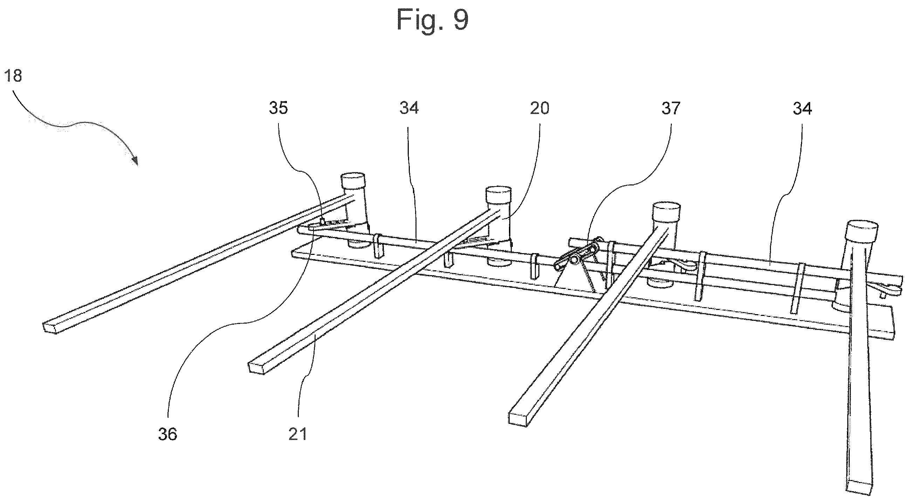

Figur 6 zeigt in einer perspektivischen Ansicht eine Hubelement-Einheit 18 mit - in diesem Beispiel - vier darin angeordneten Hubelementen 19. Jedes Hubelement 19 ist dabei aus einer vertikal in der Hubelement-Einheit 18 angeordneten Achse 20 und einem von dieser Achse abragenden Ausleger 21 zusammengesetzt. Die Ausleger 21 sind hier relativ lang dargestellt, so dass sie sich beim Einschwenken in die Hubelement-Einheit 18 gegenseitig behindern würden. Massnahmen, um dies zu verhindern werden weiter unten im Zusammenhang mit den Figuren 9 bis 11 beschrieben. Die Ausleger 21 können aber auch viel kürzer ausgebildet sein als zum Beispiel in Figur 6 dargestellt. Damit können beispielsweise Paletten oder Container angehoben werden. Auf den Auslegern 21 können nicht dargestellte Rollen angeordnet sein, ähnlich wie beim Beispiel gemäss Figur 2. Ein mit 24 bezeichneter Verbindungsbolzen ist zur Verbindung mit einer das Zugmittel 9 bildenden Kette bestimmt und Führungsrollen 25 dienen zur Führung der Hubelement-Einheit 18 während deren Auf- und Abbewegungen im Gestell 5.

Figur 7 zeigt in einem gegenüber Figur 5 vergrösserten Massstab einen Ausschnitt des Bereitstellungsträgers 2 mit den Tragelementen 3. Gut sichtbar sind dabei die zwischen die als Rollen ausgebildeten Tragelemente 3 ragenden Ausleger 21 der Hubelemente 19. In dieser Position kann eine Ware 16 in der horizontalen Transportrichtung 4 eingebracht und anschliessend mittels der Ausleger 21 in eine Lagerposition angehoben werden. Die gleiche Position der Ausleger 21 wird natürlich auch eingenommen, nachdem eine Ware 16 durch die Ausleger 21 auf dem Bereitstellungsträger 2 abgelegt und anschliessend in der horizontalen Transportrichtung 4 abtransportiert wurde.

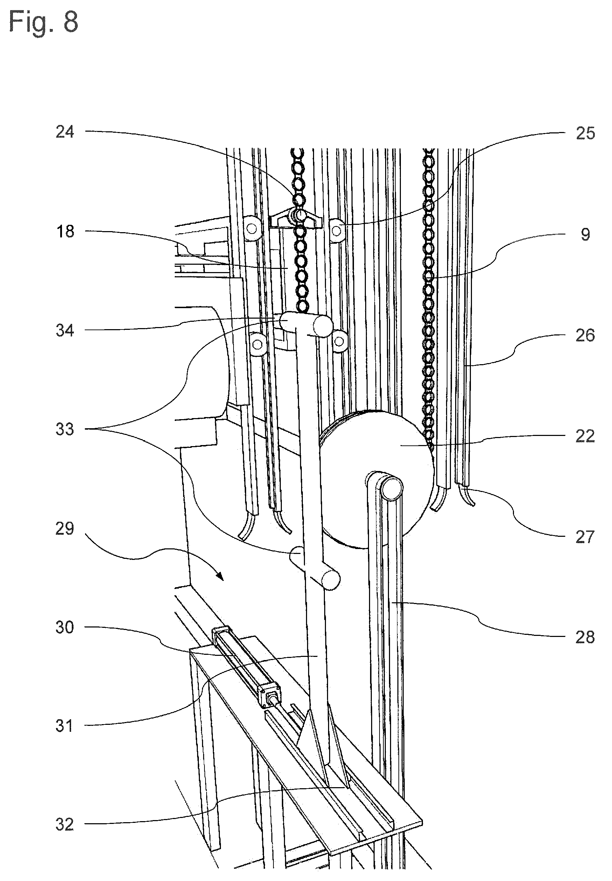

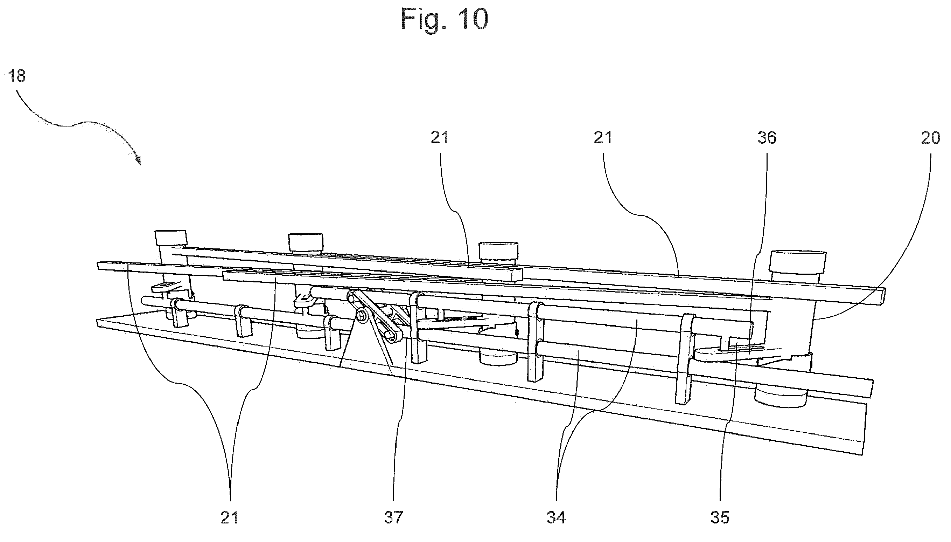

Figur 8 zeigt perspektivisch einen vergrösserten Ausschnitt des unteren Bereichs des Vertikallagers 1 gemäss Figur 5. Das Zugmittel 9 ist hier als schematisch dargestellte Kette ausgebildet. Eine Hubelement-Einheit 18 ist mit ihrem Verbindungsbolzen 24 an einem Kettenglied des Zugmittels 9 eingehängt. Die Führungsrollen 25 der Hubelement-Einheit 18 sind in Führungsschiene 26 geführt, die an ihrem unteren Ende eine Einlaufhilfe 27 haben und das Abkippen der Hubelemente bei der Warenaufnahme verhindern. Wenn eine Hubelement-Einheit 18 das untere Ende ihres Hubweges erreicht, an dem das Zugmittel 9 um die untere Umlenkrolle 22 umläuft, verlassen die Führungsrollen 25 die zugeordneten Führungsschienen 26 und die betreffende Hubelement-Einheit bewegt sich, am Verbindungsbolzen 24 hängend um die untere Umlenkrolle 22 herum, wonach sie am aufsteigenden Trum des Zugmittels 9 nach oben transportiert wird, wobei die Führungsrollen 25 wieder in die entsprechenden Führungsschienen 26 eingreifen. In der Figur ist ausserdem sichtbar, dass die untere Umlenkrolle 22 mittels eines Antriebsriemens 28 antreibbar ist. Ein als Ganzes mit 29 bezeichneter Betätigungsmechanismus dient dazu, wahlweise die Ausleger 21 einer sich unterhalb oder oberhalb der Tragelemente 3 befindenden Hubelement-Einheit 18 ein- oder auszuschwenken. Der Mechanismus enthält eine Antriebseinheit 30, die beispielsweise als pneumatische oder hydraulische Kolben-Zylinder-Einheit oder als Hubspindelgetriebe ausgebildet sein kann und mit einem Betätigungsgestänge 31 verbunden ist, das seinerseits in einem Führung 32 translatorisch bewegbar ist. Am Betätigungsgestänge 31 sind Betätigungszapfen 33 angeordnet, die jeweils mit einer in der Hubelement-Einheit 18 angeordneten Übertragungsstange 34 (siehe Figuren 9 und 10) zusammenwirken.

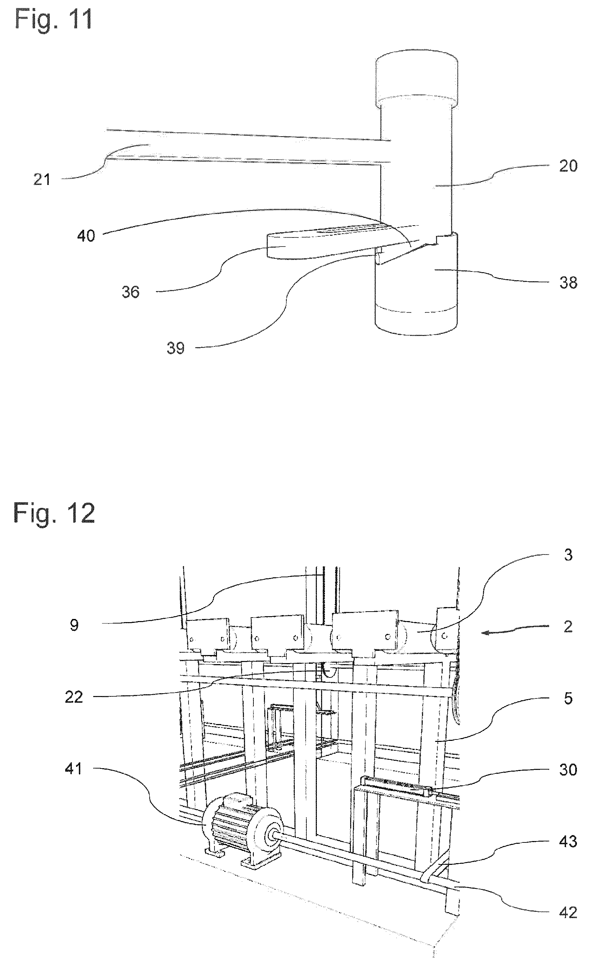

In den Figuren 9 und 10 ist die Hubelement-Einheit 18 mit ausgeschwenkten beziehungsweise eingeschwenkten Auslegern 21 dargestellt, wobei in den Figuren Teile weggelassen sind, welche die Sicht auf die zu beschreibenden Elemente verdecken würden. Die Achsen 20 der Hubelemente 19 sind jeweils mit einem Arm 36 zum Drehen der Achse und damit Schwenken des Auslegers 21 versehen. Ein an der erwähnten Übertragungsstange 34 angeordneter Stift 35 greift in einen Schlitz des Armes 36 ein. Wie man sieht, sind zwei Übertragungsstangen 34 vorhanden, wobei die in der Figur obere Übertragungsstange 34 mit den beiden in der Figur rechts angeordneten Hubelementen wirkverbunden ist, wogegen die in der Figur untere Übertragungsstange 34 mit den beiden in der Figur links angeordneten Hubelementen wirkverbunden ist. Die beiden Übertragungsstangen 34 sind durch einen zweiarmigen Hebel 37 gekoppelt, so dass sie sich bei Betätigung gegenläufig bewegen. Somit werden die Ausleger 21 gegeneinander eingeschwenkt, wie in der Figur 10 sichtbar, und finden so innerhalb der Hubelement-Einheit 18 Platz. Figur 10 zeigt auch, dass die Ausleger 21 beim Einschwenken in der Höhe versetzt werden, damit sie sich nicht gegenseitig in ihrer Schwenkbewegung behindern. Wie dies erreicht wird, zeigt Figur 11. Die Achse 20 weist einen von ihr abstehenden Nocken 39 auf und ist in einer feststehenden Hülse 38 drehbar gelagert. Beim Einschwenken des Auslegers 21 gleitet der Nocken 39 auf einer an der Hülse angeordneten Kurve 40 und hebt die Achse 20 mitsamt dem Ausleger 21 an. So kommen in der Darstellung nach Figur 10 die beiden links angeordneten Ausleger 21 in eingeschwenktem Zustand oberhalb der beiden rechts angeordneten Ausleger 21 zu liegen. Dagegen liegen alle vier Ausleger 21 in der ausgeschwenkten Position gemäss Figur 9 in einer gemeinsamen Ebene. Bei einer entsprechenden Länge der Ausleger 21 ist es möglich, Hubelemente 19 nur auf einer Seite des Bereitstellungsträgers 2 anzuordnen, welche die Waren 16 in der Art eines Gabelstaplers anheben.

Figur 12 zeigt einen perspektivischen Ausschnitt des Vertikallagers 1 gemäss Figur 5. Der Bereitstellungsträger 2 ist hier im Gestell 5 integriert, wobei jeweils zwei als Rollen ausgebildete Tragelemente 3 durch seitliche Platten zusammengefasst sind. Im Hintergrund ist eines der Zugmittel 9 und eine untere Umlenkrolle 22 sichtbar. Im Vordergrund sieht man einerseits die erwähnte Antriebseinheit 30 für die schwenkbaren Hubelemente 18 sowie einen Motor 41, der über eine Welle 42 und einen Riemen 43 die Zugmittel 9 antreibt.

Ein Vertikallager 1 der vorangehend beschriebenen Art wird vorzugsweise durch eine nicht dargestellte Steuereinrichtung automatisch wie nachstehend beschrieben betrieben. Zum Beladen des Vertikallagers 1 wird eine gegebenenfalls auf einem Warenträger 11 liegende Ware 16 in der horizontalen Transportrichtung 4 in eine Bereitstellungsposition auf den Bereitstellungsträger 2 transportiert. Dieser Transport kann durch ein an den Bereitstellungsträger 2 anschliessendes Fördermittel wie ein Förderband oder eine Rollenbahn ausgeführt werden. Alternativ kann auch der Bereitstellungsträger 2 so lang ausgebildet sein, dass er das Transportmittel bildet und in der horizontalen Transportrichtung 4 auf einer, vorzugsweise auf beiden Seiten über das Vertikallager 1 hinausragt. Bei Ausführungsarten mit schwenkbaren Hubelementen 19 gemäss den Figuren 5 bis 12 werden vorangehend die Hubelemente 19 entweder unterhalb oder oberhalb der Tragelemente 3 ausgeschwenkt und dann in der vertikalen Transportrichtung 10 in eine Höhenposition knapp unterhalb der durch die Tragelemente gebildeten Tragfläche gebracht. Aus der Bereitstellungposition wird die Ware 16 beziehungsweise der Warenträger 11 durch die Hubelemente 6 beziehungsweise 19 so weit angehoben, wie es die Höhe der nachfolgenden Ware erfordert. Die Höhe der auf dem Transportmittel bereitliegenden nachfolgenden Ware wird mit nicht dargestellten Messmitteln erfasst und der Steuereinrichtung übermittelt. Durch diese Massnahme werden die Waren mit minimalem vertikalem Platzverlust übereinander eingelagert und die Gesamthöhe des Vertikallagers kann optimal ausgenutzt werden.

Zum Entnehmen der zuunterst im Vertikallager eingelagerten Ware werden die Hubelemente 6, 19 so weit abgesenkt, bis die Ware beziehungsweise der Warenträger auf dem Bereitstellungsträger aufliegt. Anschliessend wir die Ware in der horizontalen Transportrichtung 4 aus dem Vertikallager 1 geführt und die gegebenenfalls schwenkbaren Hubelemente 19 werden in eine Position unterhalb oder oberhalb der Tragelemente 3 gebracht und eingeschwenkt. Soll dem Vertikallager eine bestimmte, eingelagerte Ware entnommen werden, unter der sich andere Waren befinden, müssen diese anderen Waren zuerst ausgelagert werden. In einfachen Fällen können diese ausgelagerten aber momentan nicht benötigten Waren auf einem Transportmittel auf einer Seite des Vertikallagers oder in einem anderen Vertikallager zwischengelagert werden, während die genannte bestimmte Ware aus dem Vertikallager herausgeführt und einer Entnahmestelle, beispielsweise einer Verpackungsstation zugeführt wird. Danach werden die zwischengelagerten Waren in der beschriebenen Weise wieder eingelagert.

Indem mindestens zwei der beschriebenen Vertikallager 1 in der horizontalen Transportrichtung 4 hintereinander angeordnet werden, erhält man eine Lageranordnung, die es erlaubt, den Platz für die Waren 16 auch in der horizontalen Transportrichtung 4 anzupassen, indem zwei oder mehr hintereinander angeordnete Vertikallager 1 synchron betrieben werden. Ausserdem erlaubt eine solche Lageranordnung weit komplexere Betriebsarten als vorangehend beschrieben. Prinzipiell können beliebig viele Vertikallager in Reihen hintereinander und Reihen nebeneinander angeordnet werden, wobei die Reihen durch entsprechende Transportmittel für die Waren miteinander verbunden werden. In jedem Vertikallager einer Reihe muss dann die zuletzt eingelagerte Ware so weit angehoben werden, dass andere Waren in der horizontalen Transportrichtung 4 durch das Vertikallager hindurch beispielsweise zu einem anderen Vertikallager oder einer Entnahmestelle transportiert werden können.

Durch eine solche Lageranordnung, die wie erwähnt eine flexible Anpassung des Lagerplatzes in der Höhe und der Länge ermöglicht, kann auf veränderte Bedürfnisse in der Lagerlogisitik ohne Zusatzinvestitionen reagiert werden. Die gleiche Lageranordnung kann sowohl beispielsweise für Container, Paletten und für Kleinteile als auch für Übergrössen verwendet werden. Es bestehen keine besonderen Bedürfnisse an das Gebäude wie zum Beispiel Nivellierung der Bodenplatte, wie es beispielsweise für den Einsatz von Regalbediengeräten notwendig wäre. Die Lageranordnung kann auch in Gebäuden mit unterschiedlichen Raumhöhen eingesetzt werden. Ausserdem erlaubt die Lageranordnung eine optimale Nutzung gegebener Platzverhältnisse, wobei insbesondere Gassen für Regalbediengeräte sowie Verkehrsflächen für Gabelstapler und Fussgänger wegfallen.

**Bezugszeichenliste**

| | | | |
|---|---|---|---|
| 1 | Vertikallager | 31 | Betätigungsgestänge |
| 2 | Bereitstellungsträger | 32 | Führung |
| 3 | Tragelement | 33 | Betätigungszapfen |
| 4 | horizontale Transportrichtung | 34 | Übertragungsstange |
| 5 | Gestell | 35 | Stift |
| 6 | Hubelement | 36 | Arm |
| 7 | Achse | 37 | Hebel |
| 8 | Rolle | 38 | Hülse |
| 9 | Zugmittel | 39 | Nocken |
| 10 | vertikale Transportrichtung | 40 | Kurve |
| 11 | Warenträger | 41 | Motor |
| 12 | Trägerkörper | 42 | Welle |
| 13 | Rippe | 43 | Riemen |
| 14 | Vertiefung | 44 | |
| 15 | | 45 | |
| 16 | Ware | 46 | |
| 17 | Stütze | 47 | |
| 18 | Hubelement-Einheit | 48 | |
| 19 | Hubelement | 49 | |
| 20 | Achse | 50 | |
| 21 | Ausleger | | |
| 22 | untere Umlenkrolle | | |
| 23 | obere Umlenkrolle | | |
| 24 | Verbindungsbolzen | | |
| 25 | Führungsrolle | | |
| 26 | Führungsschiene | | |
| 27 | Einlaufhilfe | | |
| 28 | Antriebsriemen | | |
| 29 | Betätigungsmechanismus | | |
| 30 | Antriebseinheit | | |

## Patentansprüche

**1.** Vertikallager (1) für Waren, enthaltend einen Bereitstellungsträger (2), auf den die Waren in einer horizontalen Transportrichtung (4) bringbar sind und ein Gestell (5) mit Hubelementen (6; 19) für die Waren, wobei die Hubelemente (6; 19) mittels mindestens eines im Gestell (5) angeordneten umlaufenden Zugmittels (9) in einer vertikalen Transportrichtung (10) auf- und ab bewegbar sind, **dadurch gekennzeichnet, dass** mehrere Hubelemente (6; 19) in Abständen übereinander angeordnet und mit dem Zugmittel (9) dauernd verbunden sind.

**2.** Vertikallager (1) nach Anspruch 1, **dadurch gekennzeichnet, dass** der Bereitstellungsträger (2) mit rechtwinklig zur horizontalen Transportrichtung (4) für die Waren ausgerichteten, voneinander beabstandeten Tragelementen (3) ausgestattet ist.

**3.** Vertikallager (1) nach Anspruch 2, **dadurch gekennzeichnet, dass** die Tragelemente als drehbare Rolle (3) ausgebildet sind.

**4.** Vertikallager (1) nach einem der vorangehenden Ansprüche, **dadurch gekennzeichnet, dass** die Hubelemente (6; 19) eine um eine horizontale Achse (7) drehbare Rolle (8) aufweisen.

**5.** Vertikallager (1) nach einem der Ansprüche 2 bis 4, **gekennzeichnet durch** Warenträger (11), deren in der horizontalen Transportrichtung (4) orientierte Seitenränder auf dem Bereitstellungsträger (2) jeweils zwischen zwei vertikal benachbarte Hubelemente (6; 19) reichen.

**6.** Vertikallager (1) nach einem der Ansprüche 1 bis 5, **dadurch gekennzeichnet, dass** die Hubelemente (19) um eine vertikale Achse (20) schwenkbare Ausleger (21) aufweisen, die zwischen einer ausgeschwenkten Position, in der sie in den Bereich des Bereitstellungsträgers (2) ragen in eine eingeschwenkte Position bringbar sind, in der sie sich ausserhalb des Bereichs des Bereitstellungsträgers (2) befinden.

**7.** Vertikallager (1) nach Anspruch 6, **dadurch gekennzeichnet, dass** jeweils mindestens zwei Hubelemente (19) zu einer Hubelement-Einheit (18) zusammengefasst sind.

**8.** Vertikallager nach Anspruch 7, **dadurch gekennzeichnet, dass** mindestens ein Hubelement (19) einer Hubelement-Einheit (18) Verstellmittel (40) aufweist, mit denen der Ausleger (21) dieses Hubelements (19) in der eingeschwenkten Position in eine über oder unter dem Ausleger (21) eines benachbarten Hubelements (19) liegende Höhenlage bringbar ist.

**10.** Lageranordnung mit mehreren in der horizontalen Transportrichtung (4) hintereinander angeordneten Vertikallagern (1) nach einem der vorangehenden Ansprüche.
